# EUROPÄISCHE PATENTSCHRIFT

(11) **EP 0 584 378 B1**
(45) Veröffentlichungstag und Bekanntmachung des Hinweises auf die Patenterteilung: **18.09.1996**
(21) Anmeldenummer: 92109473.6
(22) Anmeldetag: 04.06.1992
(51) Int. Cl.: C02F 1/48, B01D 35/06

(54) **Hauswasser-Feinfilter mit Wasserbehandlungseinrichtung**
Domestic filter with device for treating water
Filtre domestique avec installation de traitement d'eau

(43) Veröffentlichungstag der Anmeldung: 02.03.1994
(73) Patentinhaber: PERMA TRADE WASSERTECHNIK GmbH, D-70469 Stuttgart (DE)
(72) Erfinder: Sautter, Hans, W-7000 Stuttgart 30 (DE)
(74) Vertreter: Kern, Wolfgang, Dipl.-Ing.

(56) Entgegenhaltungen:
- EP-A- 0 325 185
- DE-B- 3 634 949

## Beschreibung

Die Erfindung betrifft einen Hauswasser-Feinfilter mit einem permanentmagnetischen Gerät als Wasserbehandlungseinrichtung, gemäß dem Oberbegriff des Anspruchs 1.

Hauswasser-Feinfilter dienen zur Ausfilterung der oftmals im Wasser mitgeführten Schwebstoffe und Feinteilchen, beispielsweise Sande. Zur Reinigung solcher Feinfilter werden diese so gebaut bzw. im Brauchwasserleitungssystem eines Hauses angeordnet, daß der im Feinfiltergehäuse austauschbar angeordnete Filter, der gewöhnlich aus einem Siebgewebe besteht, leicht entnommen werden kann, ohne daß hierzu erhebliche Montagearbeiten notwendig sind.

Derartige Feinfilter sind auch bereits mit Wasserbehandlungseinrichtungen kombiniert worden, beispielsweise sogenannten Impfbienen, die zum Zwecke der Kalkabscheidung in den das Gerät durchfließenden Strom eine chemische Substanz in präzise dosierten Mengen eingeben.

Bei dem aus der DE-A-36 34 949.6 bekannten Gerät der genannten Art wird das Ziel verfolgt, stark konzentrierte homogene Magnetfelder zu schaffen, die den im Wasser befindlichen Kalk so beeinflussen, daß er sich über einen Zeitraum von einigen Tagen nicht ins Kristallgitternetz einordnen kann, so daß Kesselsteinbildung unterbleibt. Hierzu werden die vorhandenen Permanentmagnete mit dem gefilterten Wasserstrom in direkte Berührung gebracht, der das Gerät zwischen den Magnetkörpern und einer diese mit Abstand umgebenden Strömungsführungshülse durchströmt. Der direkte Kontakt zwischen den Permanentmagneten und dem zu behandelnden Wasser kann aber dazu führen, daß der Behandlungswirkungsgrad im Laufe der Zeit sinkt, weil sich auf der dem Wasser ausgesetzten Metalloberfläche Kalziumkarbonatmoleküle abscheiden, wodurch aufgrund der eintretenden Querschnittsverengung und damit Strömungsgeschwindigkeitserhöhung die Verweildauer des Wassers im Bereich der Magnete abnimmt.

Diesem Nachteil trägt zwar ein aus der EP-A-0 325 185 bekanntes Gerät Rechnung, das jedoch keine Mittel zur einfachen Montage und Demontage aufweist, die zum Erhalt der Funktionstüchtigkeit des Gerätes von Zeit zu Zeit erforderlich ist.

Es sind ferner eine Vielzahl von Geräten zur magnetischen Wasserbehandlung bekannt, die mit dem Ziel eingesetzt werden, die Bildung von Kalkablagerungen an den Innenwänden von Rohrleitungen und die dadurch bedingten, der Fachwelt bekannten Nachteile zu vermeiden. Hierzu wird nur beispielsweise auf die US-PS 3 680 705 und die EP-143 823 verwiesen.

Diese Kalkablagerungen sind auf den CaCO₃-Gehalt des Wassers zurückzuführen und eine direkte Folge des Mangels an Kernbildungszentren in gewöhnlichem Leitungswasser. Sobald die CaCO₃-Konzentration die Löslichkeitsgrenze übersteigt, tritt eine Ausfällung ein, bei der sich das CaCO₃ entweder an im Wasser als Spurenmaterial mitgeführten Fremdstoffen anlagert oder auf den Rohrleitungswänden abscheidet, wodurch sich im letzteren Fall der nachteilige Wasserstein bildet.

In den Fallen, in denen zur Wasserbehandlung permanentmagnetische Geräte eingesetzt werden, beruht die Behandlung auf der gegenseitigen Beeinflussung von Magnetfeldern und fließendem Wasser. Dabei werden prinzipiell Magnetfelder verwendet, die durch ringförmige Permanentmagneten erzeugt werden und auf die Wassermoleküle einwirken, die den ganzen Raum eines durchströmten Rohres ausfüllen und gewöhnlich auch Kalziumkarbonat-Moleküle in einer Konzentration mitführen, deren Löslichkeitsgrenze im Wasser überschritten wird. Dies ist die Ursache dafür, daß sich an der Rohrwandung Kalziumkarbonat in Form regelmäßiger Kristalle ablagert, also Wassersteinbildung einsetzt. Unter der Wirkung des von den Permanentmagneten erzeugten Magnetfeldes kommt es zu einer Erschütterung der Wassermoleküle mit der Folge, daß die im Wasser mitgeführten Spurenteilchen als Keime für das überkonzentrierte Kalziumkarbonat zugänglich werden, wodurch sich das gelöste Kalziumkarbonat nicht an der Rohrwandung, sondern an den Keimen anlagert und zusammen mit dem Wasser ausgeschwemmt wird.

Die Aufgabe der Erfindung besteht deshalb darin, den mit einem permanentmagnetischen Gerät als Wasserbehandlungseinrichtung versehenen Hauswasser-Feinfilter so zu verbessern, daß er nicht nur über lange Zeit funktionstüchtig bleibt, sondern sich erforderlichenfalls auch leicht und schnell, beispielsweise zu Reinigungszwecken demontieren und dann wieder montieren läßt, ohne daß die die Permanentmagnete bildenden Stabmagnete neu geordnet werden müssen.

Diese Aufgabe wird durch die kennzeichnenden Merkmale des Anspruchs 1 gelöst.

Durch diese Konstruktion des Hauswasser-Feinfilters wird erreicht, daß das zu filternde bzw. zu behandelnde Wasser nach seinem Eintritt in das Filtergehäuse zunächst von den im Wasser mitgeführten Schwebstoffen weitgehend befreit wird, indem es durch einen Filterstrumpf gefiltert wird, um danach das von mehreren hintereinander angeordneten Permanentmagneten entwickelte Magnetfeld mit Hilfe einer schneckenförmigen Fördervorrichtung auf einer spiralförmigen Bahn mehrfach zu kreuzen, so daß es zu hochwirksamen Kalziumkarbonat-Ausfällungen kommt und eine Wassersteinbildung, auch Kesselsteinbildung genannt, weitgehend verhindert wird, wobei darüber hinaus eine einfache und schnelle Möglichkeit der Montage und Demontage des permanentmagnetischen Gerätes gegeben ist.

Als Schutzgehäuse hat sich die Verwendung eines Glaszylinders bewährt, weil dieser den Wasserdurchfluß durch das Hauswasser-Feinfilter und insbesondere die Feststoffabscheidung auf der Oberfläche des Filterstrumpfes sichbar werden läßt, so daß ohne weiteres festgestellt werden kann, wann der Filterstrumpf ausgetauscht bzw. gereinigt werden muß.

Das Schutzgehäuse ist zu diesem Zweck vorteilhafterweise mit dem Gehäusekopf des Feinfilters lösbar verschraubt, wobei sein Boden mit einem Mehrkant zum Aufstecken eines Schraubenschlüssels versehen sein kann, der das Auf- und Abschrauben des Schutzgehäuses erleichert.

Der Filterstrumpf besteht zweckmäßigerweise aus einem zylindrischen Siebgewebegehäuse mit geschlossenem Boden und dient mit seiner oberen Stirnseite zur Abstützung des Austrittsendes der Strömungsführungshülse mittels eines Flansches, wobei das obere Ende des Filterstrumpfes über die Strömungsführungshülse geschoben und gegenüber ihr flüssigkeitsdicht abgedichtet ist.

Die als Stabmagnete ausgebildeten Permanentmagnete erzeugen vorteilhafterweise ein auf maximal acht Eisenpolschuhe konzentriertes magnetisches Feld und sind in dem sie aufnehmenden Tragrohr wasserdicht angeordnet, wobei der wasserdichte Verschluß durch die an dem einen Ende des Tragrohres befindliche Dralleinrichtung und einen an dem anderen Tragrohrende vorgesehenen Stehbolzen erreicht werden.

Die Erfindung wird nachfolgend anhand der in der Zeichnung dargestellten Ausführungsbeispiele näher erläutert. In der Zeichnung zeigen:
- Fig. 1: eine teilweise längsgeschnittene Seitenansicht des Hauswasser-Feinfilters mit eingebauter Wasserbehandlungseinrichtung in Form eines permanentmagnetischen Geräte im Maßstab etwa 1 : 1,5;
- Fig. 2: eine teilweise längsgeschnittene Seitenansicht des oberen Endes des Hauswasser-Feinfilters von Fig. 1 in einem größeren, etwa 1 : 1 entsprechenden Maßstab;
- Fig. 3: eine teilweise längsgeschnittene Seitenansicht des unteren Endes des Hauswasser-Feinfilters von Fig.1 in einem größeren, etwa 1:1 entsprechenden Maßstab;
- Fig. 4: teilweise geschnittene Seitenansichten der in das untere Ende des Tragrohres einschraubbaren Dralleinrichtung; und
- Fig. 5: eine Seitenansicht des in das obere Ende des Tragrohres einschraubbaren Stehbolzens.

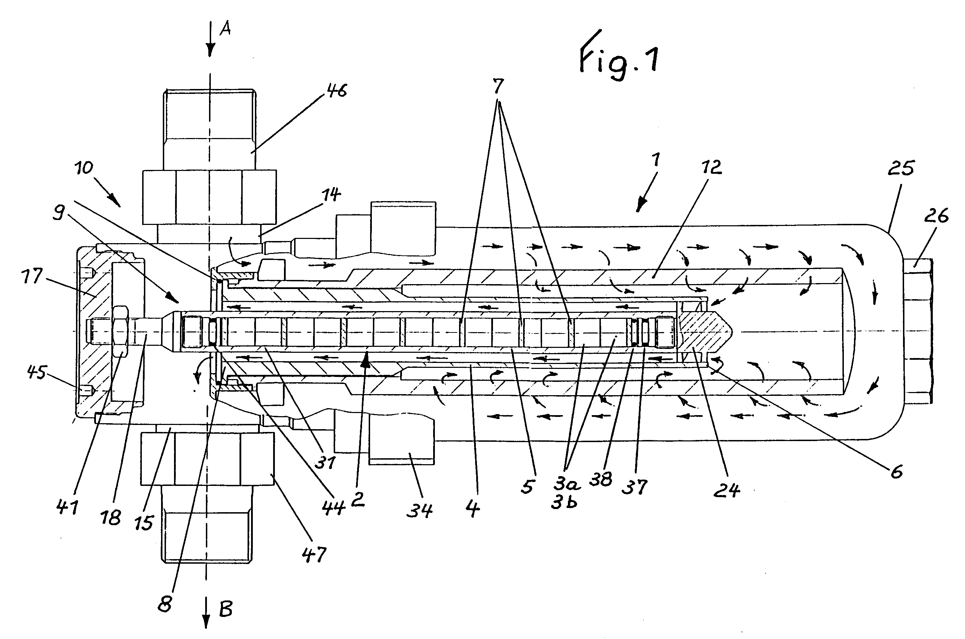

Die Fig. 1 bis 3 zeigen den konstruktiven Aufbau des mit einem permanentmagnetischen Gerät 2 zur Wasserbehandlung versehenen Hauswasser-Feinfilters 1, bestehend aus einem zylindrischen Tragrohr 5, in dem paarweise, durch Distanzringe 7 getrennt, sieben Stabmagnete 3a,3b hintereinander angeordnet sind, die ein magnetisches Feld erzeugen. Das Tragrohr 5 ist mit Abstand von einer Strömungsführungshülse 4 umgeben, die sich parallel zum Tragrohr erstreckt und die letzteres mit Hilfe einer Halterungseinrichtung 9 im Gehäusekopf 10 des Feinfilters 1 lösbar festhält.

Die Strömungsführungshülse 4 ist wiederum konzentrisch von einem Filterstrumpf 12 mit Abstand umgeben, der ein zylindrisches Siebgewebegehäuse bildet, das einen geschlossenen Boden 33 aufweist. Der Filterstrumpf seinerseits ist von einem Schutzgehäuse 13 umgeben, das von einem Glaszylinder gebildet wird und an den Gehäusekopf 10 lösbar angeschraubt ist. Zu diesem Zweck weist das obere Ende des Glaszylinders ein nicht dargestelltes Aussengewinde auf, das in das untere Ende 34 des Gehäusekopfes 10, das mit einem entsprechenden Innengewinde ausgestattet ist, eingeschraubt wird, um auf diese Weise das Schutzgehäuse lösbar, jedoch wasserdicht mit dem Gehäusekopf des Hauswasser-Feinfilters zu verbinden.

Das Tragrohr 5 besteht aus einem paramagnetischen Edelstahl oder Teflon, wird also nicht durch das von den Permanentmagneten entwickelte magnetische Feld magnetisiert.

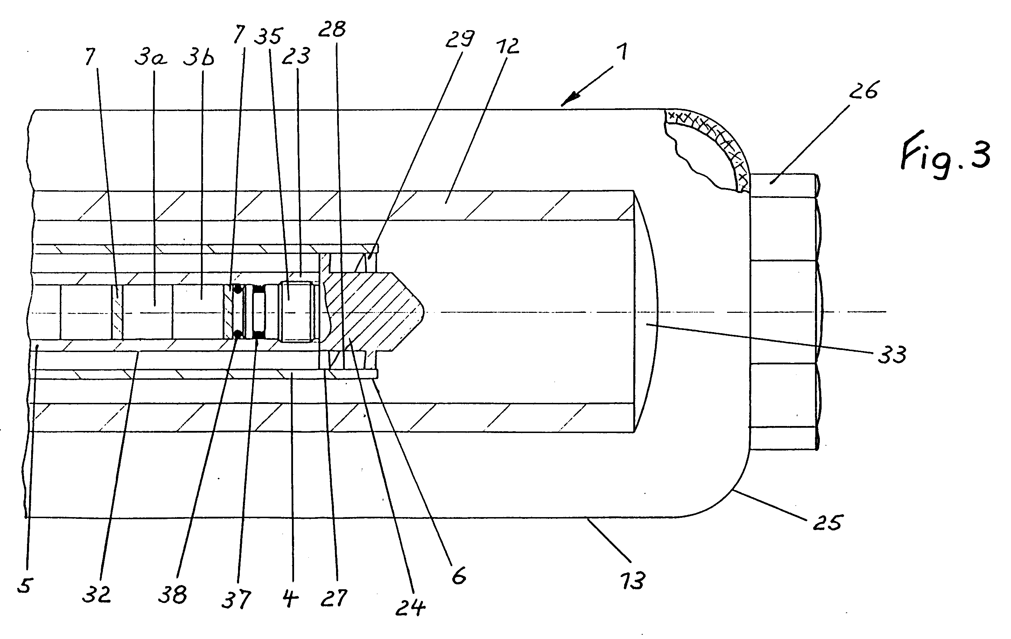

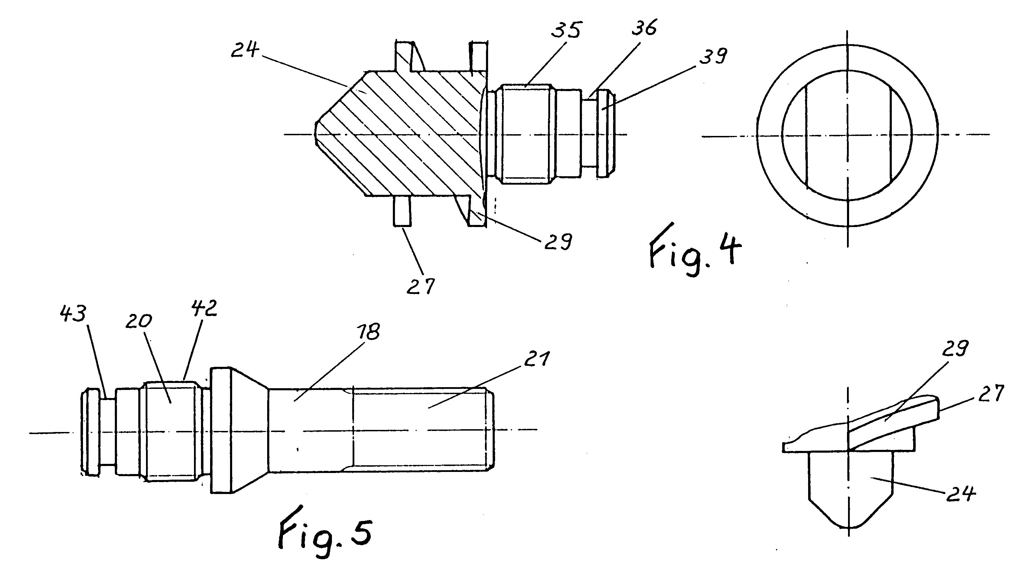

Das untere oder Eintrittsende 6 für das zu behandelnde Wasser A des Tragrohrs 5 ist durch eine schneckenförmige Dralleinrichtung 24 wasserdicht verschlossen, die im Maßstab 2:1 in Fig. 4 dargestellt ist und in das Eintrittsende 6 so eingepaßt ist, daß der Außenrand 27 ihrer Förderschnecke 29 an der Innenwand 28 der Strömungsführungshülse anliegt. Zur wasserdichten Befestigung der Dralleinrichtung 24 ist diese mit einem Gewindezapfen 35 versehen, der in das untere Ende 23 des Tragrohres 5 einschraubbar ist und an seinem der Förderschnecke 29 abgewandten Ende, wie aus den Fig. 1 und 3 ersichtlich, eine einen Dichtungsring 37 aufnehmende Ringnut 36 aufweist. Die Ringnut 36 wird von einem Ringflansch 39 begrenzt, der sich gegen einen O-Ring 38 legt, welcher an einem der Distanzringe 7 anliegt.

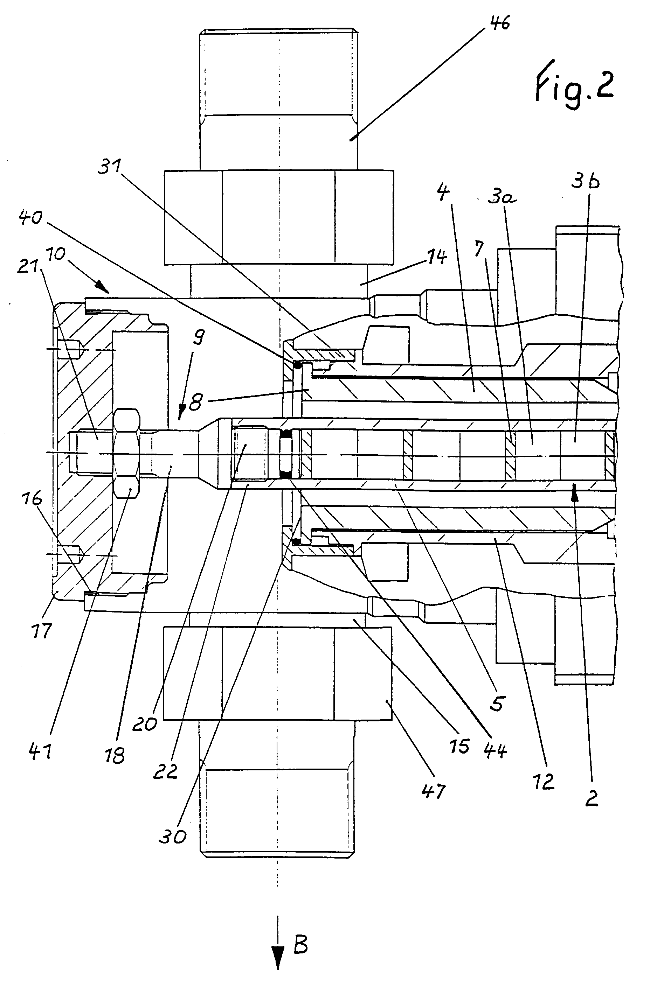

Das Austrittsende 8 der Strömungsführungshülse 4 liegt mittels eines Flansches 30 auf der oberen Stirnseite des Filterstrumpfes 12 auf, dessen oberes Ende 31, wie aus Fig. 2 ersichtlich, über die Strömungsführungshülse 4 geschoben und mit Hilfe des O-Rings 40 ihr gegenüber flüssigkeitsdicht abgedichtet ist.

Der Gehäusekopf 10 des Hauswasser-Feinfilters ist mit einem Wasserzulauf 14 und einem Wasserablauf 15 versehen und bildet einen in etwa zylindrischen Körper, der eine obere Montageöffnung 16 aufweist, die von einem Zentrierdeckel 17 verschlossen ist, an dem das permanentmagnetische Gerät 2 mittels einer Halterungseinrichtung 9 aufgehängt ist. Zu dieser Halterungseinrichtung gehört ein Stehbolzen 18, der im Detail in Fig. 5 dargestellt ist und dessen eines Ende 21 einen Gewindezapfen bildet, der in den Zentrierdeckel 17 eingeschraubt ist und mit einer Kontermutter 41 mit dem Boden des Zentrierdeckels verspannt ist. Das andere Ende 20 des Stehbolzens 18 ist mit einem Außengewinde 42 versehen, das in das obere Ende 22 des Tragrohres 5 eingeschraubt ist, sowie mit einer eine Ringdichtung 44 aufnehmenden Ringnut 43 zur wasserdichten Abdichtung des die Stabmagnete aufnehmenden Tragrohr-Hohlraums.

Die Konstruktion ist somit so geartet, daß das permanentmagnetische Behandlungsgerät 2 mit Hilfe des Zentrierdeckels in das Gehäuse des Hauswasser-Feinfilters ein- bzw. aus ihm ausgebaut werden kann. Hierzu weist die Montageöffnung 16 des Gehäusekopfes 10 ein Innengewinde auf, das mit einem Außengewinde des Zentrierdeckels verschraubt werden kann. Zwei in der Deckeloberfläche angeordnete, diametral gegenüberliegende Bohrungen 45 dienen zur Montage bzw. Demontage des Zentrierdeckels.

Der Gehäusekopf 10 weist an seinem Wasserzulauf 14 und seinem diametral diesem gegenüberliegenden Wasserablauf 15 je eine Verschraubung 46 bzw. 47 auf, durch die der Filter mit einer vorhandenen Hauswasser-Rohrleitung flüssigkeitsdicht verbunden werden kann. Das durch den Wasserzulauf 14 in den Hauswasser-Feinfilter einströmende zu behandelnde Wasser A fließt, wie aus den in Fig. 1 durch Pfeile dargestellten Strömungslinien ersichtlich, zwischen dem Schutzgehäuse 13 und dem zylindrischen Filterstrom 12 in Richtung auf den Schutzgehäuseboden 25, wobei es durch das Maschengewebe des Filterstrumpfes 12 hindurchtritt und in den Innenraum des Filterstrumpfes gelangt. Beim Hindurchtreten durch den Filterstrumpf werden Schwebeteilchen und andere Feststoffe auf der Filteroberfläche zurückgehalten, so daß das Wasser mechanisch gereinigt wird. Das durch den Filterstrumpf hindurchgetretene Wasser strömt auf der Umfangsoberfläche der Strömungsführungshülse 4 in Richtung auf den Boden 33 des Filterstrumpfes und wird von dort zur Dralleinrichtung 24 gelenkt, die es passiert, wodurch dem Wasser eine schraubenförmige Bewegungsgröße erteilt wird, so daß es spiralförmig über die äußere Oberfläche 32 des Tragrohres 5 in axialer Richtung des Rohres in Richtung auf den Gehäusekopf 10 abströmt und dabei die Feldlinien des von den zahlreichen Permanentmagneten 3a, 3b erzeugten magnetischen Feldes im wesentlichen rechtwinkelig schneidet und auf diese Weise magnetisch behandelt wird, um dann durch das Austrittsende 8 der Strömungsführungshülse 4, die aus einem magnetischen oder magnetisierbaren Material besteht, auszutreten und als behandeltes Wasser B den Hauswasser-Feinfilter zu verlassen.

Die beschriebene Konstruktion des Hauswasser-Feinfilters stellt nicht nur einen guten Filterwirkungsgrad sicher, sondern auch eine effektive magnetische Behandlung des Wassers, die noch durch den in der Strömungsführungshülse auftretenden Venturi-Effekt verstärkt wird, ohne daß das permanentmagnetische Gerät bei dieser Anordnung innerhalb des Filtergehäuses und konstruktiven Ausbildung seiner Einzelteile einen zu hohen Druckverlust verursacht. Die raumsparende Anordnung des permanentmagnetischen Gerätes innerhalb des Filterstrumpfes des Hauswasser-Feinfilters führt dabei nicht nur dazu, daß vermieden wird, die Hauswasserrohrleitung zum Einbau des Gerätes an anderer Stelle zu unterbrechen, sondern auch zu einer im Vergleich zu zwei separaten Geräten erheblich preiswerteren Kontruktion.

## Patentansprüche

1. Hauswasser-Feinfilter mit einem permanentmagnetischen Gerät als Wasserbehandlungseinrichtung, das in das Gehäuse des Feinfilters einbaubar und von dem gefilterten Wasserstrom umspülbar ist und in dem paarweise, durch Distanzringe getrennte Stabmagnete hintereinander angeordnet sind und das mit Abstand von einer Strömungsführungshülse umgeben ist, deren oberes Ende in dem mit einem Wasserzualuf und -ablauf versehenen Gehäusekopf des Feinfilters mit einer Halterungseinrichtung lösbar verbunden ist, wobei die Strömungsführungshülse von einem Filterstrumpf des Feinfilters mit Abstand umgeben ist, der seinerseits von einem Schutzgehäuse umgeben ist, die beide im Gehäusekopf verankert sind, **dadurch gekennzeichnet, daß** die Distanzringe (7) und Stabmagnete (3a, 3b) des permanentmagnetischen Gerätes (2) in einem aus einem paramagnetischen Material oder Kunststoff bestehenden Tragrohr (5) wasserdicht angeordnet sind, das von der Strömungsführungshülse (4) mit Abstand umgeben ist, die sich im wesentlichen über die gesamte axiale Länge des Tragrohres (5) erstreckt, in dessen unteres Ende (23) eine Dralleinrichtung (24) eingeschraubt ist, die in das Eintrittsende (6) der Strömungsführungshülse (4) so eingepaßt ist, daß der Außenrand (27) der Förderschnecke (29) dieser Dralleinrichtung an der Innenwand (28) der Strömungsführungshülse (4) anliegt, und daß das permanentmagnetische Gerät (2) mittels einer Halterungseinrichtung (9) an einem Zentrierdeckel (17) des Gehäusekopfes (10) aufgehängt ist, wobei die Halterungseinrichtung einen Stehbolzen (18) aufweist, dessen eines Ende (21) in den Zentrierdeckel (17) und dessen anderes Ende (20) in das Tragrohr (5) eingeschraubt sind.

2. Hauswasser-Feinfilter nach Anspruch 1, **dadurch gekennzeichnet, daß** das Schutzgehäuse (13) ein Glaszylinder oder Plexiglaszylinder ist.

3. Hauswasser-Feinfilter nach Anspruch 1 oder 2, **dadurch gekennzeichnet, daß** das Schutzgehäuse (13) in den Gehäusekopf (10) lösbar eingeschraubt ist.

4. Hauswasser-Feinfilter nach einem der Ansprüche 1 bis 3, **dadurch gekennzeichnet, daß** der Boden (25) des Schutzgehäuses (13) mit einem Mehrkant (26) zum Aufstecken eines Schraubenschlüssels versehen ist.

5. Hauswasser-Feinfilter nach einem der Ansprüche 1 bis 4, **dadurch gekennzeichnet, daß** der Filterstrumpf (12) ein zylindrisches Siebgewebegehäuse mit geschlossenem Boden (33) ist.

6. Hauswasser-Feinfilter nach einem der Ansprüche 1 bis 5, **dadurch gekennzeichnet, daß** das Austrittsende (8) der Strömungsführungshülse (4) mittels eines Flansches (30) auf der oberen Stirnseite des Filterstrumpfes (12) aufliegt, dessen oberes Ende (31) über die Strömungsführungshülse (4) geschoben und gegenüber ihr flüssigkeitsdicht abgedichtet ist.

7. Hauswasser-Feinfilter nach einem der Ansprüche 1 bis 6, **dadurch gekennzeichnet, daß** das zu behandelnde, die Dralleinrichtung (24) passierende Wasser (A) in einer schraubenförmigen Strömung über die äußere Oberfläche (32) des Tragrohres (5) in axialer Richtung des Rohres hinwegführbar ist und dabei die Feldlinien des von dem Stabmagneten (3a, 3b) erzeugten magnetischen Feldes schneidet.

8. Hauswasser-Feinfilter nach Anspruch 7, **dadurch gekennzeichnet, daß** die Feldlinien vom Wasserstrom rechtwinklig geschnitten werden.

9. Hauswasser-Feinfilter nach einem der Ansprüche 1 bis 8, **dadurch gekennzeichnet, daß** die stabförmigen Permanentmagneten (3a, 3b) ein auf maximal acht Eisenpolschuhe konzentriertes magnetisches Feld bilden.

10. Hauswasser-Feinfilter nach einem der Ansprüche 1 bis 9, **dadurch gekennzeichnet, daß** der Wasserstrom in der Strömungsführungshülse (4) durch den Venturieffekt beschleunigbar ist.

11. Hauswasser-Feinfilter nach einem der Ansprüche 1 bis 10, **dadurch gekennzeichnet, daß** die Strömungsführungshülse (4) aus einem magnetischen bzw. magnetisierbaren Edelstahl besteht.

12. Hauswasser-Feinfilter nach einem der Ansprüche 1 bis 11, **dadurch gekennzeichnet, daß** der Gehäusekopf (10) ein zylindrischer Körper ist, der eine obere Montageöffnung (16) aufweist, die von dem Zentrierdeckel (17) verschlossen ist.

## Claims

1. Household water-microfiltering device comprising a permanent magnetic apparatus as a water treating equipment which can be installed in the housing of the microfiltering device and which can be washed by the filtered stream of water and in which bar magnets are arranged one behind the other and separated by distance annulars, which equipment is distantly surrounded by a stream guiding tube, the upper end thereof is releasably connected to a holding device within the head of the housing of the microfiltering device provided within water inlet and outlet, the arrangement being such that the stream guiding tube is distantly surrounded by a filter percolator of the microfiltering device, which percolator is surrounded by a protective housing, both of which are anchored within the head of the housing, **characterized in that** the distance annulars (7) and bar magnets (3a, 3b) of the permanent magnetic apparatus (2) are arranged in a waterproof manner within a support tube (5) consisting of the paramagnetic material or plastic material, which support tube is distantly surrounded by the stream guiding tube (4) extending essentially along the whole axial length of the support tube (5) into the lower end (23) of which a twist device (24) is screwed which fits with the entrance end (6) of the stream guiding tube (4) such that the outer edge (27) of the warm conveyer (29) of that twist device is adjacent to the inner wall (28) of the stream guiding tube (4) and that the permanent magnetic apparatus (2) is suspended at the centring cover (17) of the head (10) of the housing by means of a holding device (9) provided with a standing bolt (18) the one end (21) which is screwed into the centring cover (17) and the other end (20) of which is screwed into the support tube (5).

2. Household water microfiltering device according to claim 1, characterized in that the protective housing (13) is a cylinder of glass or Plexiglas.

3. Household water microfiltering device according to claim 1 or 2, characterized in that the protective housing (13) is releasably screwed into the head (10) of the housing.

4. Household water microfiltering device according to one of the claims 1 to 3, characterized in that the bottom (25) of the protective housing (13) is provided with a nut (26) for engagement with a wrench.

5. Household water microfiltering device according to one of the claims 1 to 4, characterized in that the filter percolator (12) is a cylindrical housing comprising web screen and provided with a closed bottom (33).

6. Household water microfiltering device according to one of the claims 1 to 5, characterized in that the outlet end (8) of the stream guiding tube (4) is supported on the upper front face of the filter percolator (12) by means of a flange (30) the upper end (31) thereof extends over the stream guiding tube (4) and is sealed in a waterproof manner with respect to said tube.

7. Household water microfiltering device according to one of the claims 1 to 6, characterized in that the water (A) to be treated and passing the twist device (24) is guided in a screw like stream over the outer surface (32) of the support tube (5) in the axial direction of said tube and is cutting the magnetic flux lines provided by the magnetic field of the bar magnets (3a, 3b).

8. Household water microfiltering device according to claim 7, characterized in that the flux lines are rectangularly cut by the water stream.

9. Household water microfiltering device according to one of the claims 1 to 8, characterized in that the bar like permanent magnets (3a, 3b) provide a magnetic field concentrated to at maximum eight iron pole shoes.

10. Household water microfiltering device according to one of the claims 1 to 9, characterized in that the water stream within the stream guiding tube (4) is accelerated by the Venturi effect.

11. Household water microfiltering device according to one of the claims 1 to 10, characterized in that the stream guiding tube (4) consists of a high-grade steel which is magnetic or can be made magnetic.

12. Household water microfiltering device according to one of the claims 1 to 11, characterized in that the head (10) of the housing is a cylindrical body provided with an upper mounting opening (16) closed by a centring cover (17).

## Revendications

1. Filtre fin pour eau domestique comprenant un appareil à aimants permanents utilisé comme dispositif de traitement de l'eau et qui peut être monté dans le boîtier du filtre fin et peut être balayé selon un mouvement enveloppant par l'écoulement d'eau filtré et dans lequel des barreaux magnétiques séparés par des bagues-entretoises sont disposés par couples les uns derrière les autres, et qui est entouré, à distance, par une douille de guidage de l'écoulement, dont l'extrémité supérieure est reliée de façon amovible à un dispositif de retenue, dans la tête du boitier du filtre fin, qui est équipée d'une arrivée et d'une sortie pour l'eau, la douille de guidage de l'écoulement étant entourée, à distance, par un manchon filtrant du filtre fin, qui pour sa part est entouré par un logement de protection, le manchon filtrant et le logement de protection étant ancrés tous deux dans la tête du boîtier, caractérisé en ce que les bagues-entretoises (7) et les barreaux aimantés (3a,3b) de l'appareil à aimants permanents (2) sont disposés d'une manière étanche à l'eau dans un tube de support (5) réalisé en un matériau paramagnétique ou en matière plastique et qui est entouré, à distance, par la douille (4) de guidage de l'écoulement, qui s'étend essentiellement sur toute la longueur axiale du tube de support (5), dans l'extrémité inférieure (23) duquel est vissé un dispositif de tourbillonnement (24), qui est inséré dans l'extrémité d'entrée (6) de la douille (4) de guidage de l'écoulement de telle sorte que le bord extérieur (27) de la vis convoyeuse (29) de ce dispositif de tourbillonnement s'applique contre la paroi intérieure (28) de la douille (4) de guidage de l'écoulement, et que l'appareil à aimants permanents (2) est accroché, au moyen d'un dispositif de retenue (9), à un couvercle de centrage (17) de la tête (10) du boitier, le dispositif de retenue comportant un goujon (18), dont une extrémité (21) est vissée dans le couvercle de centrage (17) et dont l'autre extrémité (20) est vissée dans le tube de support (5).

2. Filtre fin pour eau domestique selon la revendication 1, caractérisé en ce que le logement de protection (13) est un cylindre de verre ou un cylindre de Plexiglas.

3. Filtre fin pour eau domestique selon la revendication 1 ou 2, caractérisé en ce que le logement de protection (13) est vissé de façon amovible dans la tête (10) du boîtier.

4. Filtre fin pour eau domestique selon l'une des revendications 2 à 3, caractérisé en ce que le fond (25) du logement de protection (13) comporte un élément à profil polygonal (26) pour l'application d'une clé de serrage.

5. Filtre fin pour eau domestique selon l'une des revendications 2 à 4, caractérisé en ce que le manchon filtrant (12) est un boîtier cylindrique en tissu filtrant dont le fond (33) est fermé.

6. Filtre fin pour eau domestique selon l'une des revendications 1 à 5, caractérisé en ce que l'extrémité de sortie (8) de la douille (4) de guidage de l'écoulement s'applique au moyen d'une bride (30) sur la face frontale supérieure du manchon filtrant (12), dont l'extrémité supérieure (31) est emmanchée par-dessus la douille (4) de guidage de l'écoulement et est étanchéifiée, d'une manière étanche aux liquides, par rapport à cette douille.

7. Filtre fin pour eau domestique selon l'une des revendications 1 à 6, caractérisé en ce que l'eau à traiter (A), qui traverse le dispositif de tourbillonnement (24), peut être guidée dans la direction axiale du tube, sous la forme d'un écoulement hélicoïdal sur la surface extérieure (32) du tube de support (5) et recoupe les lignes du champ magnétique produit par les barreaux aimantés (3a,3b).

8. Filtre fin pour eau domestique selon la revendication 7, caractérisé en ce que les lignes de champ sont coupées à angle droit par l'écoulement d'eau.

9. Filtre fin pour eau domestique selon l'une des revendications 1 à 8, caractérisé en ce que les aimants permanents en forme de barreaux (3a,3b) forment un champ magnétique concentré sur au maximum huit pièces polaires en fer.

10. Filtre fin pour eau domestique selon l'une des revendications 1 à 9, caractérisé en ce que l'écoulement d'eau peut être accéléré, dans la douille (4) de guidage de l'écoulement, par l'effet venturi.

11. Filtre fin pour eau domestique selon l'une des revendications 1 à 10, caractérisé en ce que la douille (4) de guidage de l'écoulement est réalisée en un acier spécial magnétique ou aimantable.

12. Filtre fin pour eau domestique selon l'une des revendications 1 à 9, caractérisé en ce que la tête (10) du boîtier est un corps cylindrique, qui possède une ouverture supérieure de montage (16), qui est fermée par un couvercle de centrage (17).
